# EUROPEAN PATENT APPLICATION

(11) **EP 4 360 486 A1**
(43) Date of publication of application: **01.05.2024**
(21) Application number: 22203953.9
(22) Date of filing: 26.10.2022
(51) Int. Cl.: A24F 40/90, A24F 40/95, A61M 15/06, H02J 7/00, A24F 40/40

(54) **CHARGING DEVICE FOR NON-COMBUSTION TYPE FLAVOR INHALER INCLUDING A RECHARGEABLE BATTERY, CHARGING PACK AND CHARGING ASSEMBLY**

(71) Applicant: JT International SA, 1202 Geneva (CH)
(72) Inventor: HARRISON, Glenn, ANDOVER, SP11 6WL (GB)
(74) Representative: Plasseraud IP

(57) **Abstract**

This invention relates to a charging device, for a non-combustion type flavor inhaler (1) including a rechargeable battery (14), comprising: a housing (20) which: has a recess (27) for receiving at least part of a non-combustion type flavor inhaler (1), the recess (27) having a closed bottom (21) opposite the recess opening (22) and a lateral wall (26) between the recess opening (22) and the closed bottom (21), can be put on a non-combustion type flavor inhaler (1), is elongate so that the depth (d) of the recess (27) is longer than the width (w) of the recess (27), includes an electric element (3) adapted to transfer energy, from a power supply external to the housing (20), into a non-combustion type flavor inhaler (1) once inserted in the housing (20), wherein the maximal thickness (thmax) of the lateral wall (26) of the recess (27) is less than half the width (w) or is less than half the diameter of the recess opening (22), and wherein the width (w), or the diameter, of the recess (27) is less than one third of the depth (d) of the recess (27).

## Description

### FIELD OF THE INVENTION

The invention relates to the technical field of charging devices, for a non-combustion type flavor inhaler including a rechargeable battery, comprising a housing which has a recess for receiving at least part of a non-combustion type flavor inhaler. This invention also relates to the technical field of charging packs and charging assemblies for the non-combustion type flavor inhaler.

### BACKGROUND OF THE INVENTION

According to a first prior art, for example disclosed in patent application EP3838004, it is known a charging device, for a non-combustion type flavor inhaler including a rechargeable battery, comprising a housing which has a recess for receiving at least part of a non-combustion type flavor inhaler.

However, this first prior art is bulky and complex to manipulate for a user.

According to a second prior art, for example disclosed in patent application US2021052009, it is known a charging device, for a non-combustion type flavor inhaler including a rechargeable battery, comprising a housing which has a recess for receiving at least part of a non-combustion type flavor inhaler.

However, this second prior art is also bulky and complex to manipulate for a user, as well as it lacks stability during performance of charging the non-combustion type flavor inhaler including a rechargeable battery.

The invention wonders about how to improve charging case structure so as to make it with a structure which would be simultaneously:
- simpler,
- smaller,
- more user friendly, that is to say easier to use,
   than both first and second prior art documents?

### SUMMARY OF THE INVENTION

The object of the present invention is to alleviate at least partly the above mentioned drawbacks.

More particularly, the invention aims to provide for a simpler, smaller and more user friendly charging device, by replacing an efficient, although rather bulky socket by a light, thin and elongate, charging device into which the non-combustion type flavor inhaler including a rechargeable battery can be made easily slip. This provided charging device remains efficient with respect to the charging process, while preferably simultaneously remaining rather simple, compact, and easy to use.

This object is achieved with a charging device, for a non-combustion type flavor inhaler including a rechargeable battery, comprising: a housing which: has a recess for receiving at least part of a non-combustion type flavor inhaler, the depth of the recess being along the direction of insertion of the non-combustion type flavor inhaler into the recess, the width, or the diameter, of the recess being the width, or the diameter, of the recess opening for insertion of the non-combustion type flavor inhaler into the recess, the recess having a closed bottom opposite the recess opening and a lateral wall between the recess opening and the closed bottom, can be put on a non-combustion type flavor inhaler, is elongate so that the depth of the recess is longer than the width of the recess, includes an electric element adapted to transfer energy, from a power supply external to the housing, into a non-combustion type flavor inhaler once inserted in the housing, wherein the maximal thickness of the lateral wall of the recess is less than half the width or is less than half the diameter of the recess opening, and wherein the width, or the diameter, of the recess is less than one third of the depth of the recess.

The maximal thickness of the lateral wall of the recess being less than half the width or is less than half the diameter of the recess opening, allows for a charging device lighter and thinner than the charging device of the first prior art. As a non-preferred alternative, the maximal thickness of the lateral wall of the recess is less than two thirds of the width or is less than half the diameter of the recess opening.

The width, or the diameter, of the recess being less than one third of the depth of the recess, allows for a charging device lighter and stabler than the charging device of the second prior art. As a non-preferred alternative, the width, or the diameter, of the recess is less than half the depth of the recess.

Both former non-preferred alternatives can be combined together.

According to preferred embodiments of the invention, this light, thin and elongate, charging device is a sleeve or a sock which is simply put on (or possibly alternatively wrapped around) the non-combustion type flavor inhaler including a rechargeable battery, so as to preferably implement a planar (2D) wireless antenna within the wall of this sleeve/sock, so as to preferably perform a wireless transfer energy from an external power supply.

According to preferred embodiments of the invention, the development time is minimized so as to allow for adding some new interesting technical improvements even to products which are either already existing or which should be soon launched. Hence, the retrofit of either existing products or soon to be launched products can be easily performed, without any need to modify either the internal mechanical structure of the product or the electronics implemented within this product. Even if this product was intended to be wire charged, it can be transformed quickly and easily so as to become wireless charged, without needing therefor any extensive redesign of the non-combustion type flavor inhaler to be wireless charged. As described in above, since the charging device has light weight and thin shape, user can easily carry the charging device in a state the non-combustion type flavor inhaler is inserted into this charging device.

This object is also achieved with a charging pack including: a charging device according to the invention, a power supply unit wirelessly connected to the charging device.

This object is still achieved with a charging assembly including: a charging device according to the invention, a non-combustion type flavor inhaler including a rechargeable battery, which is inserted within the housing of the charging device, which is electrically connected with the charging device.

Preferred embodiments comprise one or more of the following features, which can be taken separately or together, either in partial combination or in full combination, with any of previously mentioned objects of the invention.

Preferably, the housing is a sleeve, so that a non-combustion type flavor inhaler can be slid into the sleeve.

Hence, the charging device is made even lighter, thinner, and easier to use.

Advantageously, the sleeve is a sock.

Hence, the non-combustion type flavor inhaler can be inserted more easily until reaching the bottom of the sock.

Advantageously, the bottom of the sock includes a first electrical connection so as to electrically connect with an end of an elongate non-combustion type flavor inhaler once inserted in the sock.

Hence, the electrical connection of the non-combustion type flavor inhaler inside the bottom of the sock is even made easier.

Advantageously, the first electrical connection includes: one or more pogo pins, or one or more leaf spring pins.

Hence, the electrical connection of the non-combustion type flavor inhaler inside the bottom of the sock is even made easier.

Preferably, the housing is elongate so that the depth of the recess is at most ten times longer than the width of the recess, or at most five times longer than the width of the recess. The housing is elongate so that the depth of the recess is at least three times longer than the width of the recess.

Hence, the charging device is made even lighter, thinner, and easier to use.

Preferably, the electric element adapted to transfer energy has: a first electrical connection toward a non-combustion type flavor inhaler once inserted in the housing, which is preferably a wire connection, and/or a second electrical connection toward a power supply external to the housing, which is preferably a wireless connection.

Hence, user do not need to remove any plug from the charging device when user carry the charging device in a state the non-combustion type flavor inhaler is inserted into this charging device.

Preferably, the electric element adapted to transfer energy includes: at least an unremovable wireless antenna so as to receive energy from a power supply external to the housing, preferably two unremovable wireless antennas located at opposite sides of the recess, so as to sandwich in between a non-combustion type flavor inhaler once inserted in the housing, and/or at least a printed circuit board assembly so as to send energy to a non-combustion type flavor inhaler once inserted in the housing, the printed circuit board assembly(ies) being preferably connected to the wireless antenna(s), the printed circuit board assembly is configured to convert received power by the wireless antenna(s) into charging power of the inhaler.

Hence, the charging device is simpler, compacter and more robust. In detail, the charging device can perform a charging of the rechargeable battery included in the non-combustion type flavor inhaler when at least one of two unremovable wireless antennas faces an external power supply. That is, user no longer needs to pay attention which side of the recess is faced to the external power when user puts the charging device onto the external power supply.

Preferably, the wireless antenna is implemented within a wall of the housing, or is preferably implemented within a lateral wall of the housing, the wireless antenna being preferably: a 2D antenna, or a 1D antenna, the printed circuit board assembly is implemented within a wall of the housing, or is preferably implemented within a lateral wall of the housing, the printed circuit board assembly being preferably a 2D printed circuit board assembly.

Hence, the charging device is simpler, compacter and more robust. In detail, since the printed circuit board assembly is apart from the wireless antenna, electromagnetic field, which is outputted from the external power supply to the wireless antenna, may start having some hard effects on the printed circuit board assembly. Electrical parts (e.g., integrated circuit) mounted on the printed circuit board assembly may not be tough enough against such electromagnetic field or electrical noises coming from such electromagnetic field.

Preferably, the housing wall has 4 faces which are 2 broad faces facing each other and 2 narrow faces facing each other, the wireless antenna is implemented within one broad face of the wall of the housing, or is preferably implemented within one broad face of the lateral wall of the housing, the wireless antenna being preferably: a 2D antenna, or a 1D antenna, the printed circuit board assembly is implemented within one broad face of the wall of the housing, or is preferably implemented within one broad face of the lateral wall of the housing, the printed circuit board assembly being preferably a 2D printed circuit board assembly.

Hence, the charging device is simpler, compacter and more robust. Additionally, since the size of the wireless antenna is directly related to the efficiency of wireless charging, this efficiency of wireless charging may be improved. Moreover, the charging device may be further functionalized due to larger sized printed circuit board assembly.

Preferably, the housing includes: a first magnetic shield isolating the recess from the wireless antenna, the first magnetic shield being preferably a 2D magnetic shield, and/or a second magnetic shield isolating the recess from the printed circuit board assembly, the second magnetic shield being preferably a 2D magnetic shield.

Hence, the charging device is better protected against magnetic interference, while at the same time remaining simple, compact, and easy to use.

Preferably, the wireless antenna is implemented within a wall of the housing, or is preferably implemented within a lateral wall of the housing, the wireless antenna being preferably: a 2D antenna, or a 1D antenna, the printed circuit board assembly is implemented within a bottom wall of the housing, the printed circuit board assembly being preferably a 2D printed circuit board assembly.

Hence, the charging device is simpler, compacter and more robust.

Preferably, the housing wall includes a hole which is an open window so that a user interface of a non-combustion type flavor inhaler once inserted in the housing remains uncovered by the housing, and preferably the housing does not include any dedicated user interface.

Hence, the user interface of the non-combustion type flavor inhaler can be easily used to notify the status of the non-combustion type flavor inhaler and/or the charging device, thereby making the charging device simpler and compacter.

Preferably, the user interface is configured to inform a progress of the charging process by the charging device.

Hence, the user interface of the non-combustion type flavor inhaler can also be used to monitor the charging process of the rechargeable battery of the non-combustion type flavor inhaler.

Preferably, the housing wall includes one or more slots so as to be wrap around a non-combustion type flavor inhaler.

Hence, the charging device is made simpler and compacter, as well as easier to use.

Preferably, the housing wall includes no battery.

Hence, the charging device is made simpler and compacter.

Advantageously, the material of the housing is either a rubber or a plastic which is sufficiently flexible so as to tighten a non-combustion type flavor inhaler, once inserted within the housing, when the width or the diameter of the non-combustion type flavor inhaler is substantially equal to the width or the diameter of the recess.

Hence, the charging device is made simpler and compacter, as well as easier to use.

Advantageously, more than a third, preferably more than a half, of the length of the non-combustion type flavor inhaler is inserted within the housing of the charging device, in order to charge the flavor inhaler.

Hence, the charging device is made stabler during the charging process.

Advantageously, more than a tenth, preferably more than a quarter, of the length of the non-combustion type flavor inhaler is not inserted within the housing of the charging device, in order to charge the non-combustion type flavor inhaler.

Hence, the charging device is made easier to use, particularly during insertion phase just before charging process begins and during removal phase just after charging process has been terminated.

Advantageously, the non-combustion type flavor inhaler, once inserted within the housing of the charging device, in order to charge the non-combustion type flavor inhaler, is tightened by the lateral wall of the recess.

Hence, the charging device is made stabler during the charging process.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows schematically a top view of an example of a charging device according to an embodiment of the invention.
Fig. 2 shows schematically a side view of an example of a charging device according to the same embodiment of the invention.

### DETAILED DESCRIPTION OF THE INVENTION

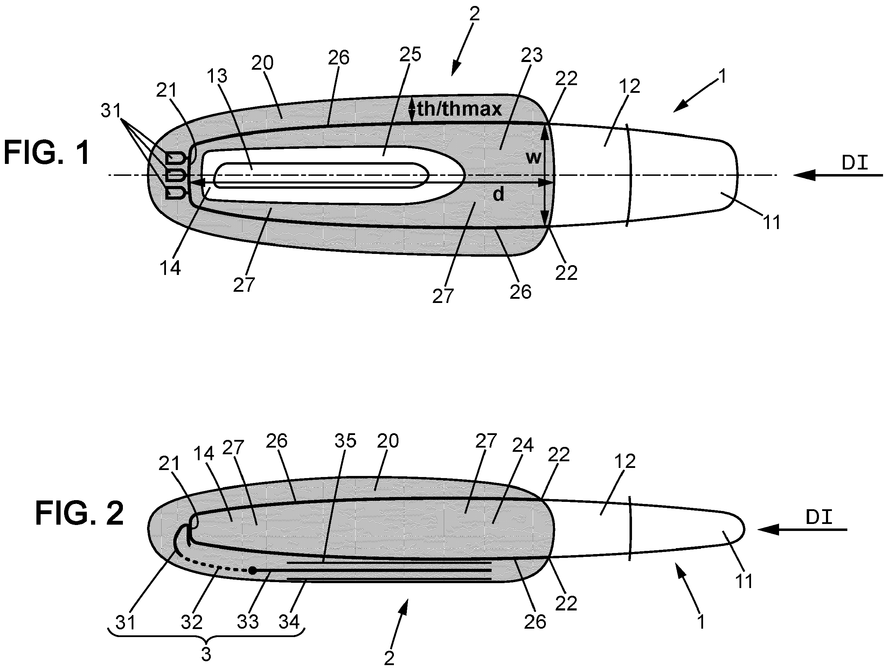

Fig. 1 shows schematically a top view of an example of a charging device according to an embodiment of the invention.

Fig. 2 shows schematically a side view of an example of a charging device according to the same embodiment of the invention.

In a first embodiment, shown on figures 1 and 2, a charging device 2 can receive a non-combustion type flavor inhaler 1.

The non-combustion type flavor inhaler 1 includes a body 12, a rechargeable battery 14, an e-liquid tank 11, a user interface 13. The rechargeable battery 14 may be lithium-ion secondary battery. Alternatively or additionally, capacitor (e.g., EDLC: Electric Double Layer Capacitor) may be used as a power source of the non-combustion type flavor inhaler 1. Preferably, the charging device 2 is also configured to charge such a capacitor. The user interface 13 may be LED (Light Emitting Diode), LCD (Liquid Crystal Display), electronic paper or combination of thereof. The user interface 13 may be powered by the rechargeable battery 14. A proximal end of the e-liquid tank 11 may work as a mouthpiece. That is, user can inhale flavoring aerosol from the proximal end of the e-liquid tank 11. The e-liquid tank 11 may be replaceable against the body 12. That is, user can exchange used e-liquid tank to unused e-liquid tank. So as to also be able to enable exchange of the e-liquid tank 11 even while the non-combustion type flavor inhaler 1 is inserted into the charging device 2, the charging device 2 may be configured to not cover the connector between the e-liquid tank 11 and the body 12, as shown in Figures 1 and 2.

The charging device 2 includes a housing 20 including a recess 27 surrounded by a lateral wall 26, closed at one end by a closed bottom 21 and opened at the other end by an opening 22. The lateral wall 26 includes two broad faces 23 facing each other, a top broad face 23 facing a bottom face 23, as well as two narrow faces 24 facing each other, a left side face 24 facing a right side face 24, so that the housing 20 has a roughly parallelepiped shape with rounded corners. The housing 20 is made either of plastic or of rubber. Plastic or rubber is preferably elastic.

This non-combustion type flavor inhaler 1 is inserted within the recess 27 of the charging device 2 along a direction DI of insertion. The housing 20 of the charging device 2 can be slip over the body 12 of the non-combustion type flavor inhaler 1 as a sleeve or as a sock is slip over an arm or a foot of a person, until the rechargeable battery 14 is connected to the first electrical connection 31, preferably to the pins 31, of the electrical element 3, or until the bottom of the non-combustion type flavor inhaler 1 is connected to the pins 31 of the electrical element 3. These pins are implemented within the closed bottom 21 of the housing 20.

The sleeve is advantageously even a sock. Hence, the non-combustion type flavor inhaler 1 can be inserted within recess 27 of the housing 20 more easily until reaching the bottom 21 of the sock. The bottom 21 of the sock includes a first electrical connection 31 so as to electrically connect with an end 14, preferably the rechargeable battery 14, of an elongate non-combustion type flavor inhaler 1 once inserted in the sock. The first electrical connection 31 includes: one or more pogo pins 31, or one or more leaf spring pins 31.

The electrical element 3 also includes at least one wireless antenna 34 connected to a printed circuit board 33 (PCB) which itself is connected to the pins 31 by a wire connection 32. Both the wireless antenna 34 and the printed circuit board 33 are implemented within the bottom broad face 23 of the lateral wall 26 of the housing 20. The wireless antenna 34 is separated from the recess 27 by at least a magnetic shield 35. Alternatively, the magnetic shield 35 may be positioned between the printed circuit board 33 and the wireless antenna 34. Such a magnetic shield 35 may protect not only the non-combustion type flavor inhaler 1, but also electrical parts mounted on the printed circuit board 33 from electromagnetic field.

Within top broad face 23, there is a hole 25, so that user interface 13 can be accessed by user, once the non-combustion type flavor inhaler 1 is inserted within the recess 27 of the charging device 2.

The lateral wall 26 presents a thickness th which has a maximal thickness value thmax at some location of this lateral wall 26. The recess 27 presents a depth d and a width w of its opening 22.

Now, further embodiments and/or further options relative to first embodiment will be described.

The housing 20 has a recess 27 for receiving at least part of the body 12 of the non-combustion type flavor inhaler 1. The recess 27 has a closed bottom 21 which is opposite to the recess opening 22 and a lateral wall 26 extending between the recess opening 22 and the closed bottom 21. The housing 20 can be put on a non-combustion type flavor inhaler 1. The housing 20 is a sleeve 20 or a sock 20, so that the non-combustion type flavor inhaler 1 can be slid into this sleeve 20 or into this sock 20.

The depth d of the recess 27 is along the direction of insertion DI of the non-combustion type flavor inhaler 1 into the recess 27. The width w, or the diameter, of the recess 27 is the width w, or the diameter, of the recess 27 opening 22 for insertion of the non-combustion type flavor inhaler 1 into the recess 27. The housing 20 is elongate so that the depth d of the recess 27 is longer than the width w of the recess 27. The maximal thickness thmax of the lateral wall 26 of the recess 27 is less than half the width w or is less than half the diameter of the recess opening 22. The width w, or the diameter, of the recess 27 is less than one third of the depth d of the recess 27. The housing 20 is elongate so that the depth d of the recess 27 is at least three times longer than the width w of the recess 27. The housing is elongate so that the depth d of the recess 27 is at most ten times longer than the width w of the recess 27, or at most five times longer than the width w of the recess 27.

The housing 20 includes an electric element 3 adapted to transfer energy, from a power supply (not shown on figures) external to the housing 20, into the rechargeable battery 14 of the non-combustion type flavor inhaler 1 once inserted in the recess 27 of the housing 20. The electric element 3 is adapted to transfer energy and has a first electrical connection 31 toward the non-combustion type flavor inhaler 1 once inserted in the housing 20. This first electrical connection 31 is preferably a wire connection. The electric element 3 also has a second electrical connection 34 toward a power supply external to the housing 20. This second electrical connection 34 is preferably a wireless connection.

The electric element 3 includes at least an unremovable wireless antenna 34 so as to receive energy from a power supply external to the housing 20, and preferably two antennas 34 located at opposite sides 23 of the recess 27, so as to sandwich in between the body 12 of the non-combustion type flavor inhaler 1 once inserted in the housing 20. The wireless antenna 34 is implemented within a wall (either bottom wall or lateral wall) of the housing 20, or is preferably implemented within a lateral wall 26 of the housing 20. The wireless antenna 34 is implemented within one broad face 23 of the wall of the housing 20, or is preferably implemented within one broad face 23 of the lateral wall 26 of the housing 20. The wireless antenna is preferably either a 2D (two dimensional) antenna, or a 1D (one dimensional) antenna. The wireless antenna may wirelessly receive energy from the external power source in the manner of electromagnetic coupling or magnetic field resonance.

The electric element 3 also includes at least a printed circuit board 33 so as to send energy to the non-combustion type flavor inhaler 1 once inserted in the housing 20, the printed circuit board(s) 33 being preferably connected to the wireless antenna(s) 34. The printed circuit board 33 is configured to convert received power by the wireless antenna(s) 34 into charging power of the inhaler 1. In detail, the printed circuit board 33 is configured to convert alternative current received from the wireless antenna 34 into direct current which is suitable for charging of the rechargeable battery 14. The printed circuit board 33 is implemented within a wall (either bottom wall or lateral wall) of the housing 20, or is preferably implemented within a lateral wall 26 of the housing 20. The printed circuit board 33 is implemented within one broad face 23 of the wall of the housing 20, or is preferably implemented within one broad face 23 of the lateral wall 26 of the housing 20. The printed circuit board 33 is preferably a 2D printed circuit board. In an alternative, the printed circuit board 33 is implemented within a bottom wall 21 of the housing 20, or is preferably implemented within a bottom wall 21 of the housing 20. It should be noted that the number of the printed circuit boards housed in the charging device 2 is not limited to one. The charging device 2 can comprise two or more printed circuit boards housed in this charging device 2.

The housing 20 includes a first magnetic shield 35 isolating the recess 27 from the wireless antenna 34. This first magnetic shield 35 is preferably a 2D magnetic shield. The housing 20 can also include a second magnetic shield 35 isolating the recess 27 from the printed circuit board 33. This second magnetic shield 35 is preferably a 2D magnetic shield.

The housing 20 lateral wall 26 includes a hole 25 which is an open window so that a user interface 13 of the non-combustion type flavor inhaler 1 once inserted in the housing 20 remains uncovered by the housing 20. Preferably, the housing 20 does not include any dedicated user interface. The user interface 13 is configured to inform a progress of the charging process by the charging device 2. The user interface 13 can include one or more capacitive touch sensors which need to be directly accessible by user's fingers. The user interface 13 may be controlled by the printed circuit board 33, and/or by any electronics (e.g., microcontroller unit) housed in the body 12. The user interface 13 may be directly powered by power supplied from the external power source without consuming energy stored in the rechargeable battery 14.

As an option, the housing 20 lateral wall 26 includes one or more slots so as to be wrap around the non-combustion type flavor inhaler 1 during its insertion within the recess 27.

The housing 20 wall includes no battery.

The embodiments of the invention also deal with a charging pack including both a charging device 2 according to the invention and a power supply unit (not shown on figures) wirelessly connected to the wireless antenna 34 of the charging device 2.

The embodiments of the invention also deal with a charging assembly including both a charging device 2 according to the invention and a non-combustion type flavor inhaler 1 including a rechargeable battery 14. This non-combustion type flavor inhaler 1 is inserted within the recess 27 of the housing 20 of the charging device 2. This non-combustion type flavor inhaler 1, once fully inserted within the recess 27 of the housing 20, becomes electrically connected with the charging device 2.

The invention has been described with reference to preferred embodiments. However, many variations are possible within the scope of the invention.

## Claims

1. A charging device, for a non-combustion type flavor inhaler (1) including a rechargeable battery (14), comprising:
- a housing (20) which:
∘ has a recess (27) for receiving at least part of a non-combustion type flavor inhaler (1),
▪ the depth (d) of the recess (27) being along the direction of insertion (DI) of the non-combustion type flavor inhaler (1) into the recess (27),
▪ the width (w), or the diameter, of the recess (27) being the width, or the diameter, of the recess opening (22) for insertion of the non-combustion type flavor inhaler (1) into the recess (27),
▪ the recess (27) having a closed bottom (21) opposite the recess opening (22) and a lateral wall (26) between the recess opening (22) and the closed bottom (21),
∘ can be put on a non-combustion type flavor inhaler (1),
∘ is elongate so that the depth (d) of the recess (27) is longer than the width (w) of the recess (27),
∘ includes an electric element (3) adapted to transfer energy,
▪ from a power supply external to the housing (20),
▪ into a non-combustion type flavor inhaler (1) once inserted in the housing (20),
wherein the maximal thickness (thmax) of the lateral wall (26) of the recess (27) is less than half the width (w) or is less than half the diameter of the recess opening (22),
and wherein the width (w), or the diameter, of the recess (27) is less than one third of the depth (d) of the recess (27).

2. A charging device according to claim 1, wherein the housing (20) is a sleeve (20), so that a non-combustion type flavor inhaler (1) can be slid into the sleeve (20).

3. A charging device according to any of preceding claims, wherein the housing (20) is elongate so that the depth (d) of the recess (27) is at most ten times longer than the width (w) of the recess (27), or at most five times longer than the width (w) of the recess (27).

4. A charging device according to any of preceding claims, wherein:
- the electric element (3) adapted to transfer energy has:
∘ a first electrical connection (31) toward a non-combustion type flavor inhaler (1) once inserted in the housing (20),
▪ which is preferably a wire connection,
∘ and/or a second electrical connection toward a power supply external to the housing (20),
▪ which is preferably a wireless connection.

5. A charging device according to any of preceding claims, wherein:
- the electric element (3) adapted to transfer energy includes:
∘ at least an unremovable wireless antenna (34) so as to receive energy from a power supply external to the housing (20),
▪ preferably two unremovable wireless antennas (34) located at opposite sides of the recess (27), so as to sandwich in between a non-combustion type flavor inhaler (1) once inserted in the housing (20),
∘ and/or at least a printed circuit board (33) assembly so as to send energy to a non-combustion type flavor inhaler (1) once inserted in the housing (20),
▪ the printed circuit board assembly(ies) (33) being preferably connected to the wireless antenna(s) (34),
▪ the printed circuit board assembly (33) is configured to convert received power by the wireless antenna(s) (34) into charging power of the inhaler (1).

6. A charging device according to claim 5, wherein:
- the wireless antenna (34) is implemented within a wall (21, 26) of the housing (20), or is preferably implemented within a lateral wall (26) of the housing (20),
∘ the wireless antenna (34) being preferably:
▪ a 2D antenna,
▪ or a 1D antenna,
- the printed circuit board assembly (33) is implemented within a wall (21, 26) of the housing (20), or is preferably implemented within a lateral wall (26) of the housing (20),
∘ the printed circuit board assembly (33) being preferably a 2D printed circuit board assembly.

7. A charging device according to claim 6, wherein:
- the housing (20) wall has 4 faces which are 2 broad faces (23) facing each other and 2 narrow faces (24) facing each other,
- the wireless antenna (34) is implemented within one broad face of the wall (21, 26) of the housing, or is preferably implemented within one broad face (23) of the lateral wall (26) of the housing (20),
∘ the wireless antenna (34) being preferably:
▪ a 2D antenna,
▪ or a 1D antenna,
- the printed circuit board assembly is implemented within one broad face of the wall (21, 26) of the housing (20), or is preferably implemented within one broad face (23) of the lateral wall (26) of the housing,
∘ the printed circuit board assembly (33) being preferably a 2D printed circuit board assembly.

8. A charging device according to any of claims 5 to 7, wherein:
- the housing (20) includes :
∘ a first magnetic shield (35) isolating the recess (27) from the wireless antenna (34),
▪ the first magnetic shield (35) being preferably a 2D magnetic shield,
∘ and/or a second magnetic shield (35) isolating the recess (27) from the printed circuit board assembly (33),
▪ the second magnetic shield (35) being preferably a 2D magnetic shield.

9. A charging device according to claim 5, wherein:
- the wireless antenna (34) is implemented within a wall (21, 26) of the housing (20), or is preferably implemented within a lateral wall (26) of the housing (20),
∘ the wireless antenna (34) being preferably:
▪ a 2D antenna,
▪ or a 1D antenna,
- the printed circuit board assembly (33) is implemented within a bottom wall (21) of the housing (20),
∘ the printed circuit board assembly (33) being preferably a 2D printed circuit board assembly.

10. A charging device according to any of preceding claims, wherein:
- the housing wall (21, 26) includes a hole (25) which is an open window so that a user interface (13) of a non-combustion type flavor inhaler (1) once inserted in the housing (20) remains uncovered by the housing (20),
∘ and preferably the housing (20) does not include any dedicated user interface.

11. A charging device according to claim 10, wherein the user interface (13) is configured to inform a progress of the charging process by the charging device (2).

12. A charging device according to any of preceding claims, wherein the housing wall (21, 26) includes one or more slots so as to be wrap around a non-combustion type flavor inhaler (1).

13. A charging device according to any of preceding claims, wherein the housing wall (21, 26) includes no battery.

14. A charging pack including:
- a charging device (2) according to any of preceding claims,
- a power supply unit wirelessly connected to the charging device (2).

15. A charging assembly including:
- a charging device (2) according to any of preceding claims,
- a non-combustion type flavor inhaler (1) including a rechargeable battery (14),
∘ which is inserted within the housing (20) of the charging device (2),
∘ which is electrically connected with the charging device (2).
